# EUROPEAN PATENT SPECIFICATION

(11) **EP 2 301 767 B1**
(45) Date of publication and mention of the grant of the patent: **24.10.2012**
(21) Application number: 10174709.5
(22) Date of filing: 31.08.2010
(51) Int. Cl.: B60C 5/10

(54) **Inner tube of tire and method for installing such inner tube of tire**
Reifeninnenschlauch und Verfahren zur Installation eines solchen Reifeninnenschlauchs
Chambre à air pour pneu et procédé de montage de cette chambre à air

(30) Priority: 25.09.2009 TW 098132387
(43) Date of publication of application: 30.03.2011
(73) Proprietor: Huang, Ho-Ching, Taipei (TW); Ishizuka, Nobu, Kanagawa-Ken (JP); Chen, Bo-Chien, Taiwan (TW)
(72) Inventor: Huang, Ho-Ching, Taipei (TW); Ishizuka, Nobu, Kanagawa-Ken (JP); Chen, Bo-Chien, Taiwan (TW)
(74) Representative: Rees, Simon John Lewis

(56) References cited:
- EP-A1- 0 090 222
- EP-A2- 0 155 210
- DE-A1-102007 015 127

## Description

### FIELD OF THE INVENTION

The present invention relates to an inner tube of tire, and more particularly to an inner tube of tire. The present invention also relates to a method for installation thereof.

### BACKGROUND OF THE INVENTION

Generally, tires are classified into two types, i.e. tube-type tires and tubeless tires. The tube-type tire has an inner tube that is inflated with gas. The inner tube full of gas will deflate when suffered from a leak by other foreign matter or burst. The inner tube with the leak or burst may be repaired to patch the broken portion. Whereas, the inner tube may be dropped in the case of seriously broken portion and replaced with a new one.

Conventionally, the inner tube is an enclosed ring-shaped tube. For changing the enclosed ring-shaped inner tube, the whole inner tube should be removed from the wheel. In the case of bicycle racing, the change process of inner tube may cost too much time and further influence a contestant's performance. In the worse situation, the contestant will withdraw from the bicycle racing.

For solving the above drawbacks, Taiwanese utility model patent No. M296165 disclosed a stick-shaped inner tube of a tire. An inflation valve is arranged at a first end of the stick-shaped inner tube. A coupling structure (e.g. a perforation) is arranged at a second end of the stick-shaped inner tube. For installing the inner tube on a wheel rim, the inner tube is wound around the wheel rim and then the inflation valve and the coupling structure are coupled with each other to form an enclosed ring-shaped tube. Since the distance between the inflation valve and the perforation is constant, the inner tube could be applied to the wheel rim with a definite diameter. In other words, if the diameter of the wheel rim is changed for the user, the spare inner tube is no longer feasible. On the other hand, the manufacture or repair workshop of a bicycle, or the sponsor or contestant of a bicycle racing should prepare various sizes of inner tube in order to comply with various wheel rim. Under this circumstance, the management cost is very high.

Japan publication No. 1986171605 disclosed a stripe of tube with an inflation valve positioned in the middle of the stripe of tube. Though it is easier to be used, compared to ring-shaped tube, however, it is difficult for an user to use the inflation valve at the middle of the stripe of tube, especially in case of the replacement of inner tube for the real wheel of a bicycle, because the rotation of a real wheel is difficult backwards by hand.

Taiwanese utility model patent No. M293857 disclosed a method for repairing an inner tube. For repairing an inner tube, both ends of the originally ring-shaped inner tube are firstly cut into open ends, and then the open ends are fused with predetermined repairing parts having integrated closed lateral ends. Since a cutting tool to cut the originally ring-shaped inner tube and the repairing parts having integrated closed lateral ends are required to implement the method for repairing the inner tube, this method is not user-friendly.
EP0090222 discloses an inflatable tube for a pneumatic tire for a bicycle wheel, designed as a piece of tubing that is longer than the rim circumference of the wheel.

### SUMMARY OF THE INVENTION

It is an object of the present invention to provide an inner tube of tire and the installation thereof. The inner tube of tire has a stick-shaped tube body with a free lateral end. The inner tube of tire could be wound around a recess of a wheel rim without the need of disassembling the wheel axle component. By passing by the two lateral ends to form an overlapped region with the tube body, the inner tube of tire is installed on the wheel rim in a time-saving manner.

By passing by the two lateral free ends to form an overlapped region with the tube body, the tube body is wound into a ring-shaped body having an adjustable size, so that the tube body is applied to at least two wheel rims of different diameters. The inner tube is advantageous to the flexibility and convenience of preparing and using. Such a tire with inner tube may be applied to cart, motorcycle, truck, and other transportation equipped with tires with inner tubes.

In accordance with the present invention, there is provided an inner tube for a tire, comprising: a stick-shaped hollow tube body having a first lateral end and a second lateral end, wherein the second lateral end is closed and in use is arranged to be overlapped by a portion of the tube body by passing the first lateral end over the second lateral end to form a ring shape with an adjustable size; and an inflation valve arranged at said first lateral end and tight-fitted in said first lateral end or the tube body, wherein at least one of said first lateral end and said second lateral end has an isotropic tapered external diameter.

In an embodiment of the inner tube, a surface tilted with respect to the tube body or perpendicular to the tube body is arranged at the other lateral end, and the inflation valve is disposed in the surface.

In an embodiment of the inner tube, a solid surface or a solid structure is formed at the closed lateral end to be enclosed with the tube body.

In an embodiment of the inner tube, plural bulges are disposed on a surface of at least one of the first lateral end and the second lateral end.
According to another aspect of the present invention, there is provided a method of manufacturing an inner tube for a tire, said inner tube having a stick-shaped hollow tube body having a first lateral end and a second lateral end, said first lateral end and said second lateral end being closed ends except for a gateway surface, said method comprising: performing a thermo-forming process, during which a molten material successively forms said tube body and said closed first and second lateral ends but retains said gateway surface, wherein at least one of said first lateral end and said second lateral end is formed with an isotropic tapered external diameter; and providing an inflation valve in said gateway surface and tight-fitted in said tube body.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic view illustrating the outward appearance of an inner tube of tire according to a first embodiment of the present invention;

FIG. 2 is a schematic view illustrating the outward appearance and a partial cross section of an inner tube of tire according to a second .embodiment of the present invention;

FIG. 3 is a schematic view illustrating the outward appearance and a partial cross section of an inner tube of tire according to a third embodiment of the present invention;

FIG. 4 is a schematic view illustrating the outward appearance and a partial cross section of an inner tube of tire according to a fourth embodiment of the present invention;

FIG. 5 is a schematic exploded view illustrating an inner tube of tire and a first wheel rim according to the present invention;

FIG. 6 is a schematic exploded view illustrating an inner tube of tire and a second wheel rim according to the present invention;

FIG. 7 is a schematic assembled view illustrating the inner tube of tire installed on the first wheel rim as shown in FIG. 5;

FIG. 8 is a schematic assembled view illustrating the inner tube of tire installed on the second wheel rim as shown in FIG. 6; and

FIG. 9 is a flowchart illustrating a method of installing an inner tube of tire according to an embodiment of the present invention.

### DETAILED DESCRIPTION OF THE PREFERRED EMBODIMENT

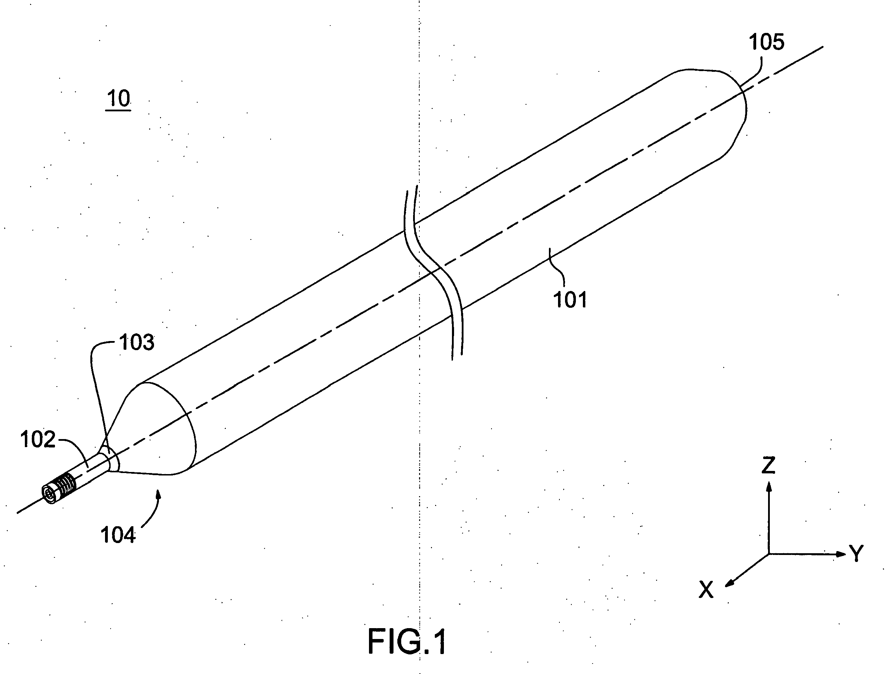

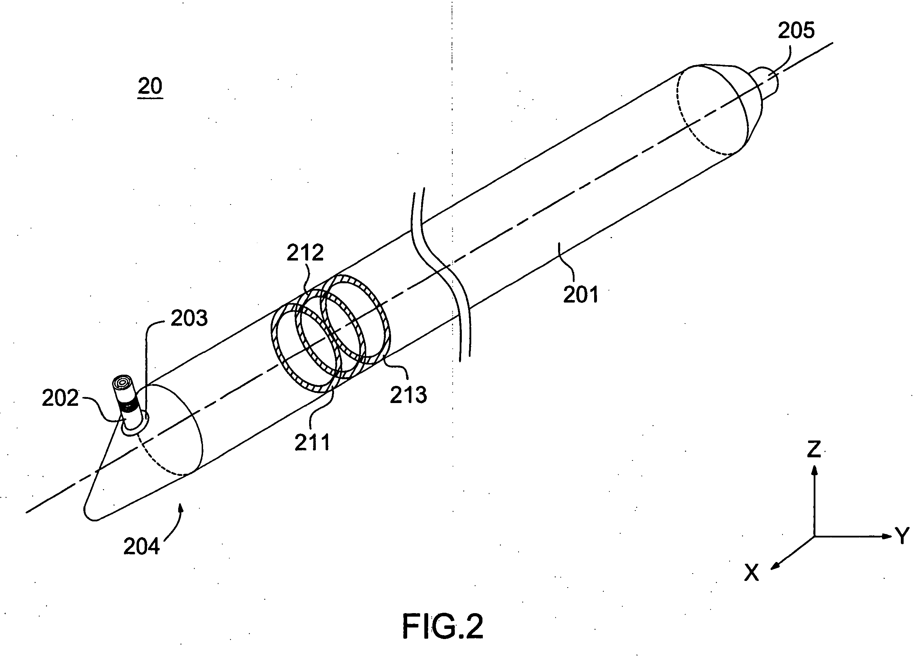

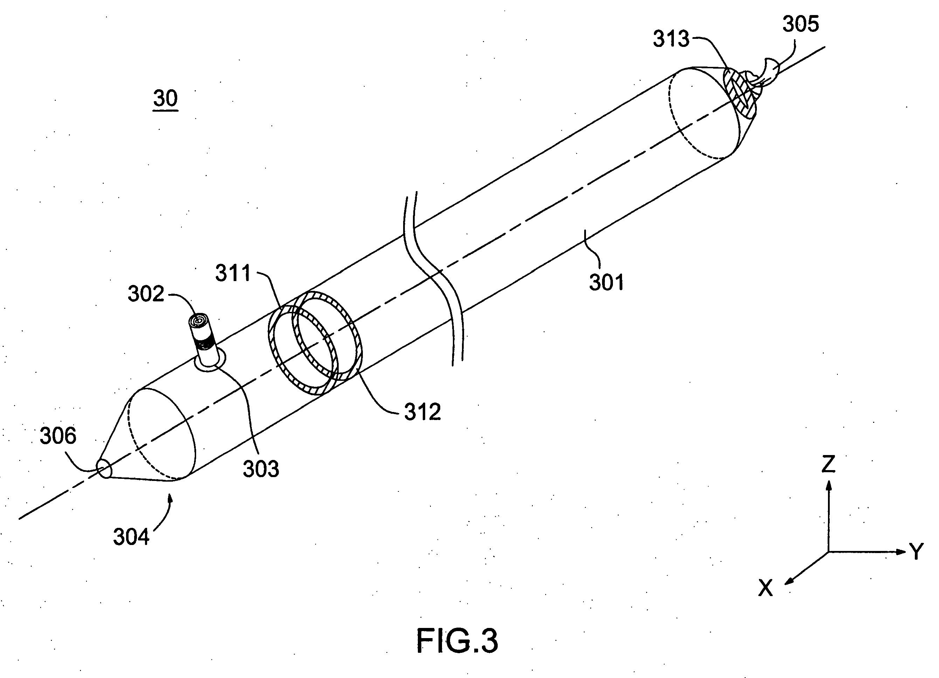

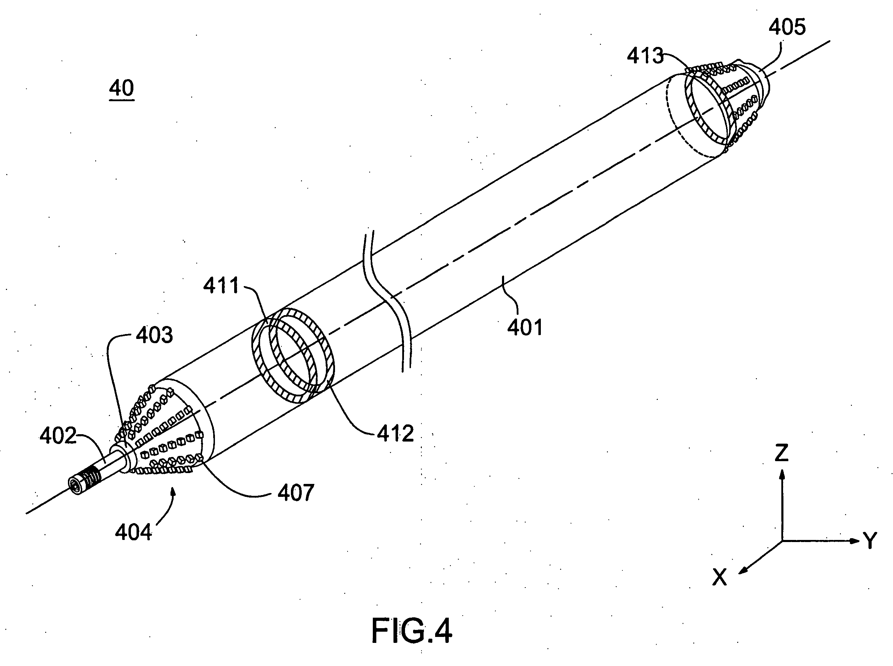

FIG. 1 is a schematic view illustrating the outward appearance of an inner tube of tire according to a first embodiment of the present invention. In this embodiment, the inner tube of tire 10 is stick-shaped. For clearly illustrating the features of the inner tube of tire 10, the inner tube of tire 10 has been inflated with gas. The inner tube of tire 10 includes a tube body 101, an inflation valve 102, a gateway surface 103, and a closed structure 105. The long side of the tube body 101 is defined along the first axis X. The short side of the tube body 101 is defined along the second axis Y In this embodiment, the first axis X and the second axis Y are orthogonal. Alternatively, an angle (other than the right angle) is defined between the first axis X and the second axis Y The normal direction of the gateway surface 103 is coincident with the direction of the first axis X. The inflation valve 102 is disposed in the gateway surface 103. The gateway surface 103 is arranged at a lateral end of the tube body 101. That is, the gateway surface 103 is arranged at a first lateral end 104 of the tube body 101 along the direction of the first axis X. Whereas, the closed structure 105 is formed at a second lateral end of the tube body 101 along the direction of the first axis X. In this embodiment, the closed structure 105 is a solid surface, which is simultaneously formed with the tube body 101. That is, the tube body 101 and the closed structure 105 are integrally formed. In some embodiments, the closed structure 105 is a solid structure such as a salient or a protruding surface. In comparison with the solid surface as shown in FIG. 1, the solid structure has a specified thickness. The solid structure is produced by sealing an open end of the tube body 101 with a material identical to or different from the tube body 101 during or after the tube body 101 is formed. Alternatively, during the tube body 10 is formed, a molten material flows into an inlet to successively form the tube body 101 and the closed structure 105; and after the tube body 101 is formed, the gateway surface is retained such that the inflation valve could be tight-fitted in the gateway surface. Alternatively, the closed structure 105 is produced by sealing an open end of the tube body 101 according to a physical or mechanical process. Alternatively, the closed structure 105 is produced by sealing an open end of the tube body 101 according to a chemical process. It is noted that, however, those skilled in the art will readily observe that numerous modifications and alterations of the solid structure may be made while retaining the teachings of the invention. For example, the solid structure is a node part 205 (see FIG. 2), a knot part 305 (see FIG. 3) or a covering part 405 (see FIG. 4).

Please refer to FIG. 1 again. The inflation valve 102 is disposed in the gateway surface 103 and tight-fitted in the gateway surface 103. The tube body 101 is a hollow body. Via an opening of the inflation valve 102, a fluid (e.g. air) is injected into the hollow portion of tube body 101, or the fluid is ejected out of the tube body 101. The inflation valve 102 could be any inflation valve used in the art. As shown in FIG. 4, the inflation valve 402 is also disposed in the gateway surface 403 at the first lateral end 404. In a case that the angle between the first axis X and the second axis Y is not orthogonal, the gateway surface is a slant surface tilted with respect to the first axis X (see FIG. 2). As shown in FIG. 2, the inflation valve 202 of the tube body 20 is also disposed in the gateway surface 203 of the tube body 201. In another embodiment as shown in FIG. 3, the inflation valve 302 of the tube body 30 is disposed in the gateway surface 303 of the tube body 301, wherein the gateway surface 303 is arranged in parallel with the first axis X. Another closed structure 306 is also arranged at the first lateral end 304 of the tube body 301 for sealing the first lateral end 304. The second lateral end of the tube body 301 is formed as the knot part 305. That is, the first lateral end 304 and the knot part 305 are the two lateral ends of the tube body 301. The tube body 301 between the two lateral ends is made of uniform material. The term "uniform material" of the tube body will be illustrated with reference to FIG. 2. As shown in FIG. 2, a plurality of adjacent seamless annular parts 211, 212 and 213 of the tube body 201 are made of the same material (e.g. butyl rubber). The normal directions of the annular parts 211, 212 and 213 are coincident with the direction of the first axis X. The radial directions of the annular parts 211, 212 and 213 are coincident with the direction of the second axis Y. Similarly, as shown in FIG. 3, the closed structures 305 and 306 are made of the same material as the annular parts 211, 212 and 213. As shown in FIG. 2, the annular parts 211, 212 and 213 have identical thickness (i.e. the wall thickness of the hollow tube). Nevertheless, according to the practical requirements, the external surfaces of the annular parts could be optionally provided with some mold-releasing lines or convex structures, so that the thicknesses or external diameter of the annular parts are somewhat different. For example, as shown in FIG. 2, the first lateral end 204 has an anisotropic tapered external diameter. Similarly, the second lateral end may also have an anisotropic tapered external diameter. For example, annular parts 311, 312 and 313 of the tube body 301 are shown in FIG. 3. Since the annular part 313 is arranged in the vicinity of the knot part 305, the annular part 313 is larger than that of the annular parts 311 and 312 in thickness but the annular part 313 is smaller than that of the annular parts 311 and 312 in external diameter. In addition, the annular part 313 has an isotropic tapered external diameter while maintaining the uniform material of the tube body 301. In another embodiment as shown in FIG. 4, the annular part 413 is arranged in the vicinity of the covering part 405, and plural bulges 407 are disposed on the tube body 401 near the first lateral end 404 and the covering part 405. As such, the annular parts 413 and 412 have different thicknesses. Although the annular parts 411, 412 and 413 have different thicknesses, the tube body 401 is still made of the uniform material.

It is noted that, however, those skilled in the art will readily observe that the locations of the inflation valve and the configurations of the closed structure are not restricted to those shown in FIGS. 1-4. Nevertheless, the stick-shaped inner tube of tire of the present invention could be applied to the tires of any sizes as long as the perimeter of the wheel rim in contact with the inner tube of tire is shorter than the length of the inner tube of tire along the direction of the first axis X.

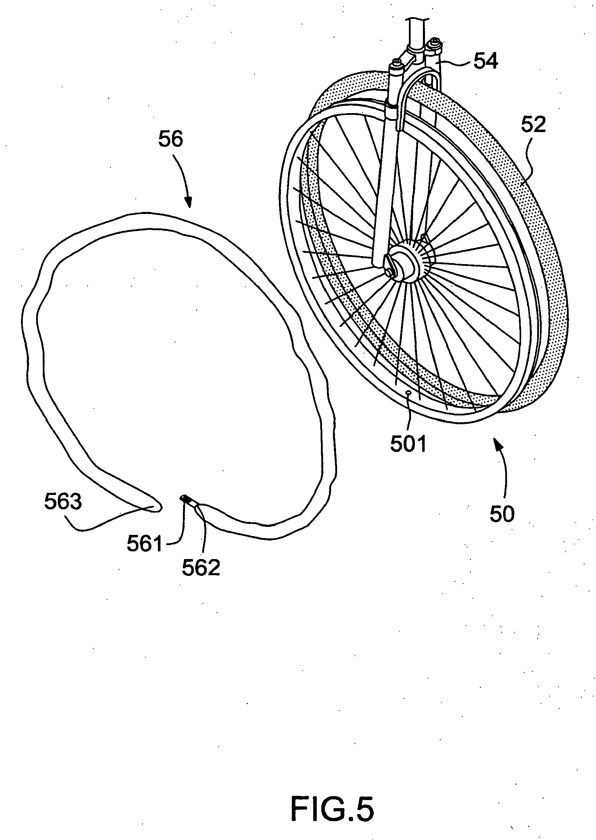

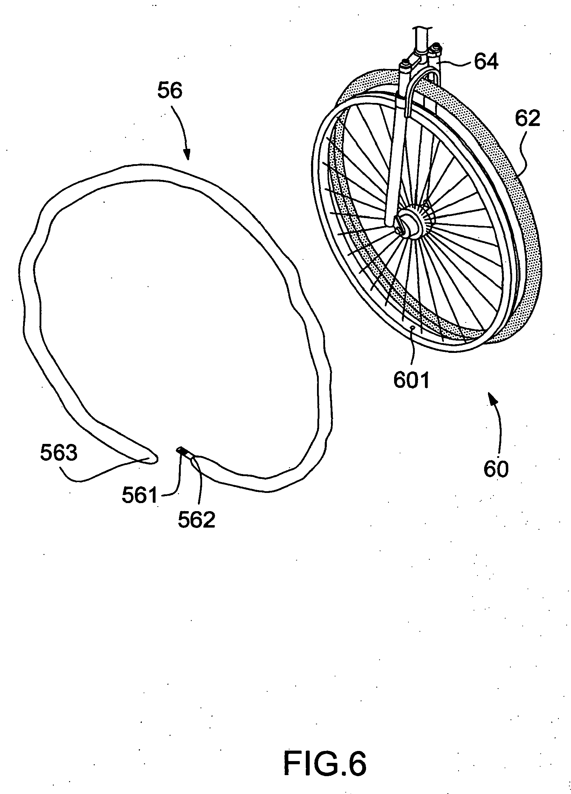

FIG. 5 is a schematic exploded view illustrating an inner tube of tire 56 and a first wheel rim 50 according to the present invention. FIG. 6 is a schematic exploded view illustrating an inner tube of tire 56 and a second wheel rim 60 according to the present invention. The diameter of the first wheel rim 50 is larger than that of the second wheel rim 60. The first wheel rim 50 and the second wheel rim 60 have a first valve hole 501 and a second valve hole 601, respectively. The first wheel rim 50 and the second wheel rim 60 are respectively mounted on the frames 54 and 64, and respectively surrounded by a first outer casing 52 and a second outer casing 62. The inner tube of tire 56 is installed in the recess of the first wheel rim 50 (see FIG 5) or the recess of the second wheel rim 60 (see FIG 6). The inner tube of tire 56 could be inflated with gas. In addition, the inner tube of tire 56 is sheathed by the first outer casing 52 (see FIG 5) or the second outer casing 62 (see FIG 6). The inflation valve 561 of the inner tube of tire 56 is protruded out of the first wheel rim 50 or the second wheel rim 60 through the first valve hole 501 (see FIG 5) or the second valve hole 601 (see FIG 6). Via an opening of the inflation valve 561, a fluid (e.g. air) is injected into the hollow portion of inner tube of tire 56, or the fluid is ejected out of the inner tube of tire 56.

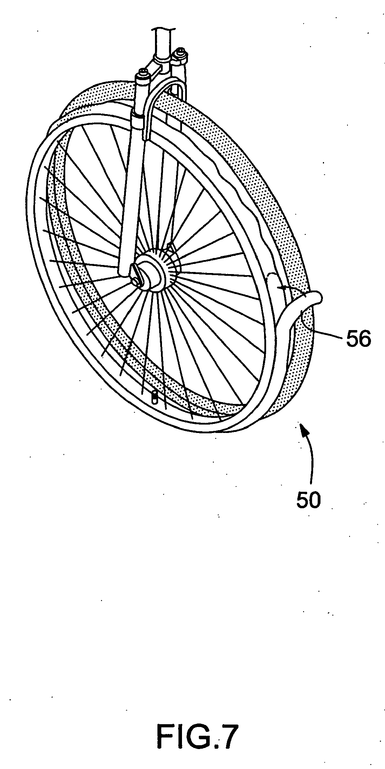

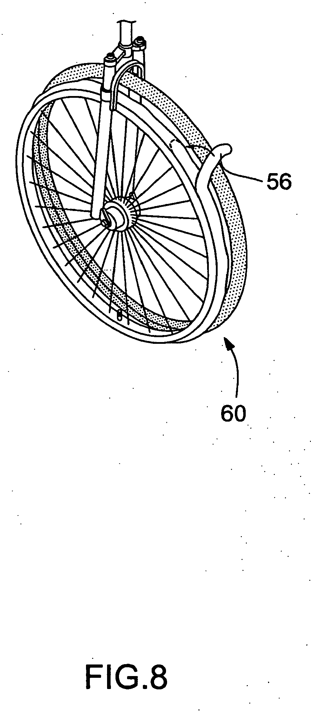

FIG 7 is a schematic assembled view illustrating the inner tube of tire 56 installed on the first wheel rim 50 as shown in FIG 5. FIG 8 is a schematic assembled view illustrating the inner tube of tire 56 installed on the second wheel rim 60 as shown in FIG. 6. The inflation valve 561 of the inner tube of tire 56 is arranged at a first lateral end 562 (also referred as a fixed end) of the inner tube of tire 56. After the inflation valve 561 of the inner tube of tire 56 is protruded out of the first wheel rim 50 or the second wheel rim 60 through the first valve hole 501 (see FIG 5) or the second valve hole 601 (see FIG 6), the tube body of the inner tube of tire 56 is wound around the first wheel rim 50 or the second wheel rim 60. Since the length of the inner tube of tire 56 is larger than the perimeter of the first wheel rim 50 or the second wheel rim 60, a second lateral end 563 (also referred as a closed end or a free end) will be past through the locations corresponding to the first valve hole 501 (see FIG 5) or the second valve hole 601 (see FIG 6) again to be form the first wheel rim 50 or the second wheel rim 60. In other words, there is an overlapped region of the inner tube of tire 56 when the inner tube of tire 56 is installed between the first wheel rim 50 and the first outer casing 52. Similarly, there is an overlapped region of the inner tube of tire 56 when the inner tube of tire 56 is installed between the second wheel rim 60 and the second outer casing 62. Since the diameters of the first wheel rim 50 and the second wheel rim 60 are different, the lengths of the overlapped regions of the inner tube of tire 56 are different. The overlapped region of the inner tube of tire 56 and the second wheel rim 60 is longer because the diameter of the second wheel rim 60 is shorter than the first wheel rim 50. Although the weight of the overlapped region of the inner tube of tire 56 may be relatively heavier than that of the non-overlapped region, the user seldom feel obvious weight bias between the overlapped region and the non-overlapped region after the inner tube of tire 56 has been inflated with a gas. On the other hand, since the gas has fluidity, the tire pressure at the overlapped region of the inner tube of tire 56 and the tire pressure at the non-overlapped region of the inner tube of tire 56 are substantially identical after the inner tube of tire 56 has been inflated with a gas. Even if a tiny tire pressure difference between the overlapped region and the non-overlapped region of the inner tube of tire 56, the user usually fails to feel obvious tire pressure difference because the inner tube of tire 56 is sheathed by the first outer casing 52 (see FIG. 5) or the second outer casing 62 (see FIG. 6).

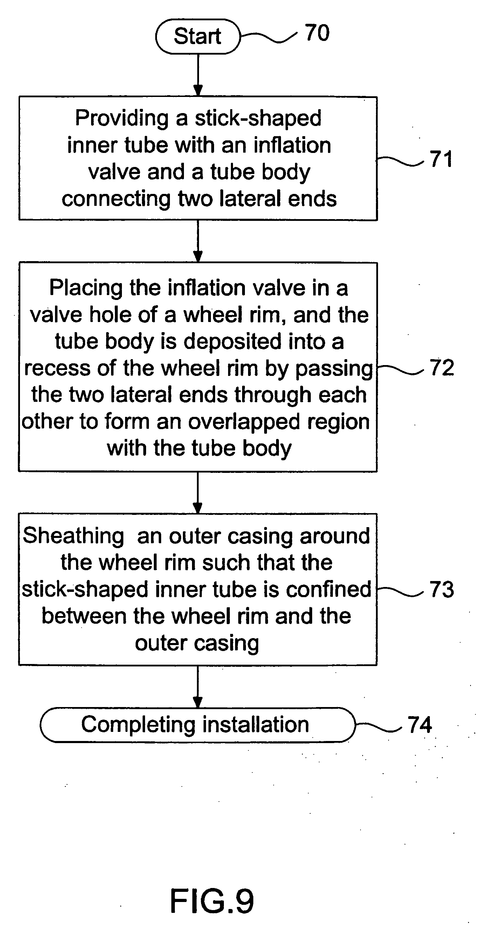

FIG. 9 is a flowchart illustrating a method of installing an inner tube of tire according to an embodiment of the present invention. After the installing method is started (Step 70), a stick-shaped inner tube is provided (Step 71). The stick-shaped inner tube has an inflation valve and a tube body connected with two lateral ends. Next, the inflation valve is placed in a valve hole of a wheel rim, and the tube body is deposited into a recess of the wheel rim by passing the two lateral ends through each other to form an overlapped region of the tube body (Step 72). Next, an outer casing is sheathed around the wheel rim such that the stick-shaped inner tube is confined between the wheel rim and the outer casing (Step 73). Meanwhile, the inner tube of tire has been installed (Step 74). Accordingly, the installation of the exemplary inner tube is easy for any user even children. Generally, it is difficult to rotate the floating rear wheel forwards and backwards by hand. However, with the stick-shaped inner tube aforementioned, which has the inflation valve onto or close to the lateral end, an user may easily set the stick-shaped inner tube into the real wheel by rotating the real wheel in forward direction, instead of rotating the real wheel forwards and backwards. Thus, user may easily replace the exemplary inner tube for the rear wheel of a bicycle.

From the above description, the stick-shaped inner tube of tire of the present invention could be easily replaced without the need of disassembling the wheel axle component from the frame. Moreover, an inner tube of tire of the present invention could be applied to at least two tires of different diameters or sizes provided that the perimeter of tire wheel rim is shorter than the length of the stick-shaped inner tube of tire. As such, even if the tires have different sizes, the stick-shaped inner tube of tire with a single specification is feasible to be installed on the tire wheel rim. Since the manufacture or repair workshop of a bicycle or the sponsor or contestant of a bicycle racing does not need to prepare many kinds of stick-shaped inner tube of tires with different lengths, the process of managing and sparing the inner tube of tires becomes more convenient. Instead of coupling the both ends of the tube body according to the prior art, the method of installing the inner tube of tire according to the present invention is more user-friendly by crossing the free end through the fixed end to define a partially overlapped region with the tube body. Such a tire with inner tube may be applied to cart, motorcycle, truck, and other transportation equipped with tires with inner tubes.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. An inner tube (10) for a tire, comprising:
a stick-shaped hollow tube body (101) having a first lateral end (104) and a second lateral end (105), wherein said second lateral end (105) is closed and in use is arranged to be overlapped by a portion of said tube body (101) by passing the first lateral end (104) over the second lateral end (105) to form a ring shape with an adjustable size; and
an inflation valve (102) arranged at said first lateral end (104) and tight-fitted in said first lateral end (104), wherein
at least one of said first lateral end (104) and said second lateral end (105) has an isotropic tapered external diameter.

2. The inner tube according to claim 1 wherein the other one of said first lateral end (104) and said second lateral end (105) has an anisotropic tapered external diameter.

3. The inner tube according to claim 1 wherein a surface tilted with respect to said tube body (201) is arranged at said first lateral end (204), and said inflation valve (202) is disposed in said surface.

4. The inner tube according to claim 1 wherein a surface perpendicular to said tube body (101) is arranged at said first lateral end (104), and said inflation valve (102) is disposed in said surface.

5. The inner tube according to claim 1 wherein plural bulges (407) are disposed on a surface of at least one of said first lateral end (404) and said second lateral end (405).

6. The inner tube according to claim 1 wherein a solid surface is formed at said second lateral end (105) to be enclosed with said tube body (101).

7. The inner tube according to claim 1 wherein a solid structure is formed at said second lateral end (105) to be enclosed with said tube body (101).

8. A method of manufacturing an inner tube for a tire, said inner tube having a stick-shaped hollow tube body (101) having a first lateral end (104) and a second lateral end (105), said first lateral end and said second lateral end being closed ends except for a gateway surface (103), said method comprising:
performing a thermo-forming process, during which a molten material successively forms said tube body and said closed first and second lateral ends but retains said gateway surface (103), wherein at least one of said first lateral end (104) and said second lateral end (105) is formed with an isotropic tapered external diameter; and
providing an inflation valve (102) in said gateway surface (103) and tight-fitted in said tube body (101).

9. The method according to claim 8 wherein two solid surfaces are respectively formed at said first lateral end (104) and said second lateral end (105) to be enclosed with said tube body (101).

10. The method according to claim 8 wherein two solid structures are respectively formed at said first lateral end (104) and said second lateral end (105) to be enclosed with said tube body (101).

11. The inner tube of tire according to claim 8 wherein at least one of said first lateral end (104) and said second lateral end (105) has an anisotropic tapered external diameter.

## Patentansprüche

1. Innenschlauch (10) für einen Reifen, umfassend
einen stockförmigen hohlen Röhrenkörper (101) mit einem ersten lateralen Ende (104) und einem zweiten lateralen Ende (105), wobei das zweite laterale Ende (105) verschlossen ist und bei Betrieb so angeordnet ist, dass es durch einen Abschnitt des Röhrenkörpers (101) überlappt wird, indem das erste laterale Ende (104) über das zweite laterale Ende (105) verläuft, um eine Ringform mit anpassbarer Größe zu bilden; und
ein Aufblasventil (102), angeordnet am ersten lateralen Ende (104) und fest angebracht im ersten lateralen Ende (104), wobei
mindestens eines aus dem ersten lateralen Ende (104) und dem zweiten lateralen Ende (105) einen isotropisch spitz zulaufenden Außendurchmesser hat.

2. Innenschlauch gemäß Anspruch 1, wobei das andere aus dem ersten lateralen Ende (104) und dem zweiten lateralen Ende (105) einen nicht isotropisch spitz zulaufenden Außendurchmesser hat.

3. Innenschlauch gemäß Anspruch 1, wobei eine gegenüber dem Röhrenkörper (201) geneigte Oberfläche am ersten lateralen Ende (204) angeordnet ist, und das Aufblasventil (202) in der Oberfläche angeordnet ist.

4. Innenschlauch gemäß Anspruch 1, wobei eine Oberfläche, rechtwinklig zum Röhrenkörper (101), am ersten lateralen Ende (104) angeordnet ist, und das Aufblasventil (102) in der Oberfläche angeordnet ist.

5. Innenschlauch gemäß Anspruch 1, wobei mehrere Ausbuchtungen (407) auf einer Oberfläche von mindestens einem aus dem ersten lateralen Ende (404) und dem zweiten lateralen Ende (405) angeordnet sind.

6. Innenschlauch gemäß Anspruch 1, wobei eine feste Oberfläche am zweiten lateralen Ende (105) gebildet wird, um mit dem Röhrenkörper (101) eingeschlossen zu sein.

7. Innenschlauch gemäß Anspruch 1, wobei eine feste Struktur am zweiten lateralen Ende (105) gebildet wird, um mit dem Röhrenkörper (101) eingeschlossen zu sein.

8. Herstellungsverfahren für einen Innenschlauch für einen Reifen, wobei der Innenschlauch einen stockförmigen hohlen Röhrenkörper (101) aufweist mit einem ersten lateralen Ende (104) und einem zweiten lateralen Ende (105), wobei das erste laterale Ende zweite laterale Ende verschlossene Enden sind, ausgenommen eine Gateway-Oberfläche (103), das Verfahren umfassend
Ausführen eines Thermobildungs-Prozesses, bei welchem ein geschmolzenes Material nacheinander den Röhrenkörper bildet und das erste und das zweite laterale Ende, aber die Gateway-Oberfläche (103) beibehält, wobei mindestens eines aus dem ersten lateralen Ende (104) und dem zeiten lateralen Ende (105) mit einem isotropisch spitz zulaufenden Außendurchmesser gebildet wird; und
Bereitstellen eines Aufblasventils (102) in der Gateway-Oberfläche (103) und fest angebracht im Röhrenkörper (101).

9. Verfahren gemäß Anspruch 8, wobei zwei feste Oberflächen jeweils am ersten lateralen Ende (104) und am zweiten lateralen Ende (105) gebildet werden, um mit dem Röhrenkörper (101) eingeschlossen zu sein.

10. Verfahren gemäß Anspruch 8, wobei zwei feste Strukturen jeweils am ersten lateralen Ende (104) und am zweiten lateralen Ende (105) gebildet werden, um mit dem Röhrenkörper (101) eingeschlossen zu sein.

11. Innenschlauch für einen Reifen gemäß Anspruch 8, wobei mindestens eines aus dem ersten lateralen Ende (104) und dem zweiten lateralen Ende (105) einen nicht isotropisch spitz zulaufenden Außendurchmesser aufweist.

## Revendications

1. Chambre à air (10) pour pneu, comprenant :
un corps tubulaire creux en forme de bâton (101) ayant une première extrémité latérale (104) et une seconde extrémité latérale (105), dans laquelle ladite seconde extrémité latérale (105) est fermée et est agencée, à l'usage, pour être recouverte par une partie dudit corps tubulaire (101) en faisant passer la première extrémité latérale (104) sur la seconde extrémité latérale (105) afin de former une forme annulaire avec une taille réglable ; et
une valve de gonflage (102) agencée au niveau de ladite première extrémité latérale (104) et étanche dans ladite première extrémité latérale (104), dans laquelle :
au moins l'une parmi ladite première extrémité latérale (104) et ladite seconde extrémité latérale (105) a un diamètre externe isotrope progressivement rétréci.

2. Chambre à air selon la revendication 1, dans laquelle l'autre parmi ladite première extrémité latérale (104) et ladite seconde extrémité latérale (105) a un diamètre externe anisotrope progressivement rétréci.

3. Chambre à air selon la revendication 1, dans laquelle une surface inclinée par rapport audit corps tubulaire (201) est agencée au niveau de ladite première extrémité latérale (204), et ladite valve de gonflage (202) est disposée dans ladite surface.

4. Chambre à air selon la revendication 1, dans laquelle une surface perpendiculaire audit corps tubulaire (101) est agencée au niveau de ladite première extrémité latérale (104) et ladite valve de gonflage (102) est disposée dans ladite surface.

5. Chambre à air selon la revendication 1, dans laquelle plusieurs renflements (407) sont disposés sur une surface d'au moins l'une parmi ladite première extrémité latérale (404) et ladite seconde extrémité latérale (405).

6. Chambre à air selon la revendication 1, dans laquelle une surface solide est formée au niveau de ladite seconde extrémité latérale (105) pour être enfermée avec ledit corps tubulaire (101).

7. Chambre à air selon la revendication 1, dans laquelle une structure solide est formée au niveau de ladite seconde extrémité latérale (105) pour être enfermée avec ledit corps tubulaire (101).

8. Procédé pour fabriquer une chambre à air pour pneu, ladite chambre à air ayant un corps tubulaire creux en forme de bâton (101) ayant une première extrémité latérale (104) et une seconde extrémité latérale (105), ladite première extrémité latérale et ladite seconde extrémité latérale étant des extrémités fermées, excepté pour une surface de passage (103), ledit procédé comprenant les étapes consistant à :
réaliser un procédé de thermoformage, pendant lequel un matériau en fusion forme successivement ledit corps tubulaire et lesdites première et seconde extrémités latérales fermées, mais retient ladite surface de point d'accès (103), dans lequel au moins l'une parmi ladite première extrémité latérale (104) et ladite seconde extrémité latérale (105) est formée avec un diamètre externe isotrope progressivement rétréci ; et
prévoir une valve de gonflage (102) dans ladite surface de point d'accès (103) et étanche dans ledit corps tubulaire (101).

9. Procédé selon la revendication 8, dans lequel deux surfaces pleines sont respectivement formées au niveau de ladite première extrémité latérale (104) et ladite seconde extrémité latérale (105) pour être enfermées avec ledit corps tubulaire (101).

10. Procédé selon la revendication 8, dans lequel deux structures pleines sont respectivement formées au niveau de ladite première extrémité latérale (104) et ladite seconde extrémité latérale (105) à enfermer avec ledit corps tubulaire (101).

11. Chambre à air pour pneu selon la revendication 8, dans laquelle au moins l'une parmi ladite première extrémité latérale (104) et ladite seconde extrémité latérale (105) a un diamètre externe anisotrope progressivement rétréci.
